(19) **Europäisches Patentamt**

**European Patent Office**

**Office européen des brevets**

(11) **EP 1 228 101 B1**

(12) **EUROPÄISCHE PATENTSCHRIFT**

(45) Veröffentlichungstag und Bekanntmachung des Hinweises auf die Patenterteilung:
**02.07.2003   Patentblatt 2003/27**

(21) Anmeldenummer: **00958529.0**

(22) Anmeldetag: **09.09.2000**

(51) Int Cl.$^7$: **C08F 2/00**

(86) Internationale Anmeldenummer:
**PCT/EP00/08817**

(87) Internationale Veröffentlichungsnummer:
**WO 01/023446 (05.04.2001 Gazette 2001/14)**

(54) **POLYETHYLEN FORMMASSE MIT VERBESSERTER ESCR-STEIFIGKEITSRELATION UND SCHWELLRATE, VERFAHREN ZU IHRER HERSTELLUNG UND IHRE VERWENDUNG**

POLYETHYLENE MOULDING COMPOUND WITH AN IMPROVED ESCR-STIFFNESS RELATION AND AN IMPROVED SWELLING RATE, A METHOD FOR THE PRODUCTION THEREOF AND THE USE THEREOF

MATIERE MOULABLE EN POLYETHYLENE A RELATION RESISTANCE A LA CORROSION FISSURANTE/RIGIDITE ET A TAUX DE GONFLEMENT AMELIORES, AINSI QUE PROCEDE DE PREPARATION ET D'UTILISATION DE LADITE MATIERE

(84) Benannte Vertragsstaaten:
**AT BE CH CY DE DK ES FI FR GB GR IE IT LI LU MC NL PT SE**

(30) Priorität: **24.09.1999   DE 19945980**

(43) Veröffentlichungstag der Anmeldung:
**07.08.2002   Patentblatt 2002/32**

(73) Patentinhaber: **Basell Polyolefine GmbH**
**50389 Wesseling (DE)**

(72) Erfinder:
• **BERTHOLD, Joachim**
  **D-65779 Kelkheim (DE)**
• **BÖHM, Ludwig**
  **D-65795 Hattersheim (DE)**
• **ENDERLE, Johannes-Friedrich**
  **D-60318 Frankfurt (DE)**
• **SCHUBBACH, Reinhard**
  **D-83346 Bergen (DE)**

(56) Entgegenhaltungen:
EP-A- 0 129 312            EP-A- 0 905 151
GB-A- 2 056 996           US-A- 5 338 589
US-A- 5 422 400

**Beschreibung**

Die vorliegende Erfindung betrifft eine Polyethylen Formmasse mit multimodaler Molmassenverteilung und ein Verfahren zur Herstellung dieser Formmasse in Gegenwart eines katalytischen Systems aus Ziegler Katalysator und Cokatalysator über eine mehrstufige aus aufeinanderfolgenden Flüssigphasenpolymerisationen bestehenden Reaktionsabfolge und aus der Formmasse durch Blasformextrusion hergestellte Hohlkörper.

Polyethylen wird in großem Umfang zur Herstellung von Formteilen und Behältnissen verwendet, weil er ein Werkstoff mit geringem Eigengewicht ist, der trotzdem eine besonders hohe mechanische Festigkeit, hohe Korrosionsbeständigkeit gegenüber Feuchtigkeit und Wasser in Kombination mit Luftsauerstoff und absolut zuverlässige Langzeitbeständigkeit besitzt, und weil Polyethylen eine gute chemische Beständigkeit aufweist und insbesondere leicht für Flaschen, Kanister und Treibstoffbehälter in Kraftfahrzeugen verarbeitet werden kann.

Die EP-A-603,935 beschreibt bereits eine Formmasse auf Basis von Polyethylen, die eine bimodale Molmassenverteilung besitzt und die sich unter anderem auch zur Herstellung von Rohren eignet.

Ein Rohstoff mit einer noch weiter verbreiterten Molmassenverteilung ist in der US-PS 5,338,589 beschrieben und wird mit einem hochaktiven Katalysator hergestellt, der aus der WO 91/18934 bekannt ist und bei dem das Magnesiumalkoholat als gelförmige Suspension eingesetzt wird. Überraschend wurde gefunden, daß der Einsatz dieses Werkstoffes in Formteilen, insbesondere in Rohren, eine gleichzeitige Verbesserung der in teilkristallinen Thermoplasten üblicherweise gegenläufigen Eigenschaften Steifigkeit und Kriechneigung einerseits und Spannungsrissbeständigkeit und Zähigkeit andererseits ermöglicht.

Die bekannten bimodalen Produkte zeichnen sich insbesondere durch eine gute Verarbeitbarkeit bei gleichzeitig herausragender Spannungsriss-Steifigkeitsrelation aus. Diese Eigenschaftskombination ist von besonderer Bedeutung bei der Herstellung von Hohlkörpern wie Flaschen, Kanister und Treibstoffbehälter in Kraftfahrzeugen aus Kunststoff. Neben dieser Eigenschaftskombination ist aber für die Herstellung von Hohlkörpern aus Kunststoff eine möglichst hohe Schwellrate der Kunststoffschmelze notwendig, weil die Schwellrate bei der Blasformextrusion unmittelbar dafür verantwortlich ist, dass sich die Wanddickensteuerung, die Ausbildung der Schweißnaht und die Verschweißbarkeit bei der Fertigung im Betrieb optimal einstellen lassen.

Es ist bekannt, dass sich Kunststoffe mit hohen Schwellraten mit sogenannten Phillips-Katalysatoren, das sind Polymerisationskatalysatoren auf Basis von Chromverbindungen, gut erzeugen lassen. Die so hergestellten Kunststoffe besitzen aber eine ungünstige Spannungsriss-Steifigkeitsrelation im Vergleich zu den bekannten Kunststoffen mit bimodaler Molmassenverteilung.

Aus der EP-A-0 797 599 ist ein Verfahren bekannt, das in aufeinanderfolgenden Gasphasen- und Flüssigphasenpolymerisationen sogar ein Polyethylen mit einer trimodalen Molmassenverteilung liefert. Dieses Polyethylen eignet sich zwar schon sehr gut zur Herstellung von Hohlkörpern in Blasformextrusionsanlagen, es ist jedoch in seinem Verarbeitungsverhalten noch verbesserungswürdig, wegen der noch zu niedrigen Schwellrate der Kunststoffschmelze.

Aufgabe der vorliegenden Erfindung war die Entwicklung einer Polyethylen Formmasse, mit der sich gegenüber allen bekannten Werkstoffen ein noch besseres Verhältnis von Steifigkeit zu Spannungsrissfestigkeit realisieren lässt und die außerdem eine hohe Schwellrate ihrer Schmelze besitzt, die bei der Herstellung von Hohikörpern nach dem Blasformextrusionsverfahren nicht nur eine optimale Wanddickensteuerung zulässt sondern gleichzeitig auch eine hervorragende Schweißnahtausbildung und Wanddickenverteilung ermöglicht.

Gelöst wird diese Aufgabe durch eine Formmasse der eingangs genannten Gattung, deren Kennzeichenmerkmale darin zu sehen sind, dass sie 30 bis 60 Gew.-% eines niedermolekularen Ethylenhomopolymers A, 65 bis 30 Gew.-% eines hochmolekularen Copolymers B aus Ethylen und einem anderen Olefin mit 4 bis 10 C-Atomen und 1 bis 30 Gew.-% eines ultrahochmolekularen Ethylenhomo- oder -copolymers C enthält, wobei alle Prozentangaben bezogen sind auf das Gesamtgewicht der Formmasse.

Die Erfindung betrifft femer auch ein Verfahren zur Herstellung dieser Formmasse in kaskadierter Suspensionspolymerisation und Hohlkörper aus dieser Formmasse mit ganz hervorragenden mechanischen Festigkeitseigenschaften.

Die erfindungsgemäße Polyethylen Formmasse besitzt eine Dichte bei einer Temperatur von 23 °C im Bereich von $\geq$ 0,940 g/cm$^3$ und eine breite trimodale Molmassenverteilung. Das hochmolekulare Copolymer B enthält geringe Anteile von bis zu 5 Gew.-% an weiteren Olefinmonomereinheiten mit 4 bis 10 C-Atomen. Beispiele für solche Comonomere sind 1-Buten, 1-Penten, 1-Hexen, 1 Octen oder 4-Methylpenten-1. Das ultrahochmolekulare Ethylenhomo- oder -copolymer C kann gegebenenfalls auch eine Menge von 0 bis 10 Gew.-% an einem oder mehreren der vorstehend genannten Comonomeren enthalten.

Die erfindungsgemäße Formmasse besitzt ferner einen Schmelzflussindex gemäß ISO 1133, ausgedrückt als MFI$_{190/5}$, im Bereich von 0,01 bis 10 dg/min und eine Viskositätszahl VZ$_{ges}$, gemessen nach ISO/R 1191 in Dekalin bei einer Temperatur von 135 °C im Bereich von 190 bis 700 cm$^3$/g, vorzugsweise von 250 bis 500 cm$^3$/g.

Die Trimodalität kann als Maß für die Lage der Schwerpunkte der drei Einzelmolmassenverteilungen mit Hilfe der Viskositätszahlen VZ nach ISO/R 1191 der in den aufeinanderfolgenden Polymerisationsstufen gebildeten Polymeren beschrieben werden. Hierbei sind folgende Bandbreiten der in den einzelnen Reaktionsstufen gebildeten Polymeren zu berücksichtigen:

Die an dem Polymer nach der ersten Polymerisationsstufe gemessene Viskositätszahl $VZ_1$ ist identisch mit der Viskositätszahl $VZ_A$ des niedermolekularen Polyethylens A und liegt erfindungsgemäß im Bereich von 40 bis 180 $cm^3$/g.

$VZ_B$ des in der zweiten Polymerisationsstufe gebildeten höhermolekularen Polyethylens B läßt sich nach der folgenden mathematischen Formel berechnen:

$$VZ_B = \frac{VZ_2 - w_1 \cdot VZ_1}{1 - w_1}$$

wobei $w_1$ für den Gewichtsanteil des in der ersten Stufe gebildeten niedermolekularen Polyethylens steht, gemessen in Gew.-%, bezogen auf das Gesamtgewicht des in den beiden ersten Stufen gebildeten Polyethylens mit bimodaler Molmassenverteilung, und $VZ_2$ für die Viskositätszahl, die an dem Polymer nach der zweiten Polymerisationsstufe gemessen wird. Der für $VZ_B$ errechnete Wert liegt normalerweise im Bereich von 150 bis 800 $cm^3$/g.

$VZ_C$ für das in der dritten Polymerisationsstufe gebildete ultrahochmolekulare Homo- oder Copolymer C berechnet sich nach der folgenden mathematischen Formel:

$$VZ_C = \frac{VZ_3 - w_2 \cdot VZ_2}{1 - w_2}$$

wobei $w_2$ für den Gewichtsanteil des in den beiden ersten Stufen gebildeten Polyethylens mit bimodaler Molmassenverteilung steht, gemessen in Gew.-%, bezogen auf das Gesamtgewicht des in allen drei Stufen gebildeten Polyethylens mit trimodaler Molmassenverteilung, und $VZ_3$ für die Viskositätszahl, die an dem Polymer nach der dritten Polymerisationsstufe gemessen wird und die identisch ist mit der oben bereits erwähnten $VZ_{ges}$. Der für $VZ_C$ errechnete Wert liegt erfindungsgemäß im Bereich von 900 bis 3000 $cm^3$/g.

Das Polyethylen wird durch Polymerisation der Monomeren in Suspension oder bei Temperaturen im Bereich von 20 bis 120 °C, einem Druck im Bereich von 2 bis 60 bar und in Gegenwart eines hochaktiven Ziegler-Katalysators erhalten, der aus einer Übergangsmetallverbindung und einer aluminiumorganischen Verbindung zusammengesetzt ist. Die Polymerisation wird dreistufig, d.h. in drei hintereinander geschalteten Stufen geführt, wobei die Molmasse jeweils mit Hilfe von zudosiertem Wasserstoff geregelt wird.

Die für die vorstehend beschriebene kaskadierte Fahrweise erforderliche Langzeitaktivität des Polymerisationskatalysators wird durch einen speziell entwickelten Ziegler Katalysator gewährleistet. Ein Maß für die Tauglichkeit dieses Katalysators ist seine extrem hohe Wasserstoffansprechbarkeit und seine über eine lange Zeitdauer von 1 bis 8 h gleichbleibend hohe Aktivität. Konkrete Beispiele für einen derart tauglichen Katalystor sind die in der EP-A-0 532 551, der EP-A-0 068 257 und der EP-A-0 401 776 aufgeführten Umsetzungsprodukte von Magnesiumalkoholaten mit Übergangsmetallverbindungen des Titans, Zirkons oder Vanadiums und einer metallorganischen Verbindung eines Metalls der Gruppen I, II oder III des Periodensystems der Elemente.

Die erfindungsgemäße Polyethylen Formmasse kann neben dem Polyethylen noch weitere Zusatzstoffe enthalten. Solche Zusatzstoffe sind beispielsweise Wärmestabilisatoren, Antioxidantien, UV-Absorber, Lichtschutzmittel, Metalldesaktivatoren, peroxidzerstörende Verbindungen, basische Costabilisatoren in Mengen von 0 bis 10 Gew.-%, vorzugsweise 0 bis 5 Gew.-%, aber auch Füllstoffe, Verstärkungsmittel, Weichmacher, Gleitmittel. Emulgatoren, Pigmente, optische Aufheller, Flammschutzmittel, Antistatika, Treibmittel oder Kombinationen von diesen in Gesamtmengen von 0 bis 50 Gew.-%, bezogen auf das Gesamtgewicht der Mischung.

Die erfindungsgemäße Formmasse eignet sich besonders gut zur Herstellung von Hohlkörpern wie Kraftstoffkanister, chemikalienresistente Gebinde, Kanister, Fässer und Flaschen, indem die Polyethylen Formmasse zunächst in einem Extruder bei Temperaturen im Bereich von 200 bis 250 °C plastifiziert und dann durch eine Düse in eine Blasform ausgepresst und dort abgekühlt wird.

Für die Verarbeitung zu Hohlkörpern können sowohl konventionelle Einschneckenextruder mit glatter Einzugszone als auch Hochleistungsextruder mit feingenutetem Zylinder und förderwirksamem Einzug eingesetzt werden. Die Schnecken werden typischerweise als Dekompressionsschnecken ausgelegt mit einer Länge von 25 bis 30 D (D = Durchmesser). Die Dekompressionsschnecken besitzen eine Austragszone, in der Temperaturunterschiede in der Schmelze ausgeglichen werden und in der die durch Scherung entstandenen Relaxationsspannungen abgebaut werden sollen.

**Beispiel 1 (erfindungsgemäß):**

Die Polymerisation von Ethylen wurde in einem kontinuierlichen Verfahren in drei hintereinander in Serie geschalteten Reaktoren betrieben. In den ersten Reaktor wurde ein Ziegler Katalysator, ausreichend Suspensionsmittel, Ethylen und Wasserstoff eingespeist. Die Menge an Ethylen und Wasserstoff wurde so eingestellt, dass auf neun Volumenteile Ethylen ein Volumenteil Wasserstoff entfiel.

Der Katalysator war ein Ziegler Katalysator, wie er in Beispiel 2 der WO 91/18934 beschrieben ist, der dort die Katalysator Komponente a mit der Operations-Nummer 2.2 hatte, und der zusammen mit einem Cokatalysator aus einer metallorganischen Verbindung eines Metalls der Gruppe I, II oder III des Periodensystems der Elemente zugegeben wird.

In den ersten Reaktor wurden der Katalysator mit dem Cokatalysator und Triethylamin im Verhältnis 1:10 (mol/mol) kontinuierlich zudosiert.

Die Polymerisation in dem ersten Reaktor wurde bei einer Temperatur von 76 °C und einem Druck von 0,78 MPa über eine Zeitdauer von 3,3 h bei einem Wasserstoffgehalt im Gasraum von 67 bis 68 Vol.-% durchgeführt.

Die Suspension aus dem ersten Reaktor wurde danach in einen zweiten Reaktor überführt in dem die Menge an Wasserstoff auf 5 Volumenteile im Gasraum reduziert und die Menge an $C_4$-Comonomer auf 5 Volumenteile angehoben worden war. Die Reduzierung der Menge an Wasserstoff erfolgte über eine $H_2$-Zwischenentspannung.

Die Polymerisation in dem zweiten Reaktor wurde bei einer Temperatur von 84 °C und einem Druck von 0,5 MPa über eine Zeitdauer von 54 min durchgeführt.

Die Suspension aus dem zweiten Reaktor wurde über eine weitere $H_2$-Zwischenentspannung, mit der die Menge an Wasserstoff in dem Gasraum des dritten Reaktors auf ≤ 5 Vol.-% eingestellt wird, in den dritten Reaktor überführt.

Die Polymerisation in dem dritten Reaktor wurde bei einer Temperatur von 47 °C und einem Druck von ≤ 0,23 MPa über eine Zeitdauer von 30 min durchgeführt.

Die den dritten Reaktor verlassende Polymersuspension wurde nach Abtrennen des Suspensionsmittels und Trocknen der Granulierung zugeführt.

Die für die Polyethlen Formmasse hergestellt nach Beispiel 1 geltenden Viskositätszahlen und Mengenanteile $w_A$, $w_B$ und $w_C$ an Polymer A, B und C sind zusammen mit den entsprechenden Daten der nach den folgenden Beispielen 2 bis 4 hergestellten Formmassen in der später aufgeführten Tabelle 1 angegeben.

**Beispiel 2 (erfindungsgemäß)**

Beispiel 1 wurde mit folgenden Änderungen nachgestellt:
Die Polymerisation in dem ersten Reaktor wurde bei einer Temperatur von 82 °C und einem Druck von 0,89 MPa über eine Zeitdauer von 2,6 h bei einem Wasserstoffgehalt von 68 Vol.-% im Gasraum des Reaktors durchgeführt.

Die Suspension aus dem ersten Reaktor wurde danach in einen zweiten Reaktor überführt in dem die Menge an Wasserstoff auf 10 Volumenteile im Gasraum des Reaktors reduziert und die Menge an $C_4$-Comonomer auf 0,7 Volumenteile im Gasraum des Reaktors angehoben worden war. Die Reduzierung der Menge an Wasserstoff erfolgte wieder über eine $H_2$-Zwischenentspannung.

Die Polymerisation in dem zweiten Reaktor wurde bei einer Temperatur von 80 °C und einem Druck von 0,37 MPa über eine Zeitdauer von 66 min durchgeführt.

Die Suspension aus dem zweiten Reaktor wurde in den dritten Reaktor überführt und die Menge an Wasserstoff in dem Gasraum des dritten Reaktors auf 0,6 Vol.-% und die an $C_4$-Comonomer auf 0,8 Vol.-% eingestellt.

Die Polymerisation in dem dritten Reaktor wurde bei einer Temperatur von 80 °C und einem Druck von 0,15 MPa über eine Zeitdauer von 36 min durchgeführt.

Die für die nach Beispiel 2 hergestellte Polyethlen Formmasse geltenden Viskositätszahlen und Mengenanteile $w_A$, $w_B$ und $w_C$ an Polymer A, B und C sind zusammen mit den entsprechenden Daten der nach den anderen Beispielen hergestellten Formmassen in der später aufgeführten Tabelle 1 angegeben.

**Beispiel 3 (erfindungsgemäß)**

Beispiel 2 wurde mit folgenden Änderungen nachgestellt:
Die Polymerisation in dem ersten Reaktor wurde bei einer Temperatur von 80 °C und einem Druck von 0,74 MPa über eine Zeitdauer von 2,1 h bei einem Wasserstoffgehalt von 65 Vol.-% im Gasraum des Reaktors durchgeführt.

Die Suspension aus dem ersten Reaktor wurde danach in einen zweiten Reaktor überführt in dem die Menge an Wasserstoff auf 4,1 Volumenteile im Gasraum des Reaktors reduziert und die Menge an $C_4$-Comonomer auf 1,1 Volumenteile im Gasraum des Reaktors angehoben worden war. Die Reduzierung der Menge an Wasserstoff erfolgte wieder über eine $H_2$-Zwischenentspannung.

Die Polymerisation in dem zweiten Reaktor wurde bei einer Temperatur von 80 °C und einem Druck von 0,24 MPa über eine Zeitdauer von 54 min durchgeführt.

Die Suspension aus dem zweiten Reaktor wurde in den dritten Reaktor überführt und die Menge an Wasserstoff in dem Gasraum des dritten Reaktors auf 1,1 Vol.-% und die an $C_4$-Comonomer auf 0,8 Vol.-% eingestellt.

Die Polymerisation in dem dritten Reaktor wurde bei einer Temperatur von 60 °C und einem Druck von 0,12 MPa über eine Zeitdauer von 30 min durchgeführt.

Die für die nach Beispiel 3 hergestellte Polyethlen Formmasse geltenden Viskositätszahlen und Mengenanteile $w_A$, $w_B$ und $w_C$ an Polymer A, B und C sind zusammen mit den entsprechenden Daten der nach den anderen Beispielen hergestellten Formmassen in der später aufgeführten Tabelle 1 angegeben.

**Beispiel 4 (erfindungsgemäß)**

Beispiel 3 wurde mit folgenden Änderungen nachgestellt:

Die Polymerisation in dem ersten Reaktor wurde bei einer Temperatur von 80 °C und einem Druck von 0,82 MPa über eine Zeitdauer von 2,2 h bei einem Wasserstoffgehalt von 74 Vol.-% im Gasraum des Reaktors durchgeführt.

Die Suspension aus dem ersten Reaktor wurde danach in einen zweiten Reaktor überführt in dem die Menge an Wasserstoff auf 4,0 Volumenteile im Gasraum des Reaktors reduziert und die Menge an $C_4$-Comonomer auf 1,3 Volumenteile im Gasraum des Reaktors angehoben worden war. Die Reduzierung der Menge an Wasserstoff erfolgte wieder über eine $H_2$-Zwischenentspannung.

Die Polymerisation in dem zweiten Reaktor wurde bei einer Temperatur von 80 °C und einem Druck von 0,20 MPa über eine Zeitdauer von 54 min durchgeführt.

Die Suspension aus dem zweiten Reaktor wurde in den dritten Reaktor überführt und die Menge an Wasserstoff in dem Gasraum des dritten Reaktors auf 1,0 Vol.-% und die an $C_4$-Comonomer auf 1,0 Vol.-% eingestellt.

Die Polymerisation in dem dritten Reaktor wurde bei einer Temperatur von 60 °C und einem Druck von 0,08 MPa über eine Zeitdauer von 30 min durchgeführt.

Die für die nach Beispiel 2 hergestellte Polyethlen Formmasse geltenden Viskositätszahlen und Mengenanteile $w_A$, $w_B$ und $w_C$ an Polymer A, B und C sind zusammen mit den entsprechenden Daten der nach den anderen Beispielen hergestellten Formmassen in der später aufgeführten Tabelle 1 angegeben.

**Vergleichsbeispiel (VB):**

Beispiel 1 wurde nachgestellt, jedoch mit dem Unterschied, dass nach der zweiten Reaktionsstufe die Polymerisation abgebrochen wurde.

Die Polymerisation in dem ersten Reaktor wurde bei einer Temperatur von 84 °C und einem Druck von 0,90 MPa über eine Zeitdauer von 4,2 h bei einem Wasserstoffgehalt im Gasraum des Reaktors von 76 Vol.-% durchgeführt.

Die Suspension aus dem ersten Reaktor wurde danach in einen zweiten Reaktor überführt in dem die Menge an Wasserstoff auf 3,0 Volumenteile im Gasraum des Reaktors reduziert und die Menge an $C_4$-Comonomer auf 1,9 Volumenteile im Gasraum des Reaktors angehoben worden war. Die Reduzierung der Menge an Wasserstoff erfolgte wieder über eine $H_2$-Zwischenentspannung.

Die Polymerisation in dem zweiten Reaktor wurde bei einer Temperatur von 83 °C und einem Druck von 0,21 MPa über eine Zeitdauer von 80 min durchgeführt.

Dabei entstand ein Polyethylen mit einer bimodalen Molmassenverteilung, wie es dem Stand der Technik nach der EP-A 603 935 entspricht.

Tabelle 1

| Beispiel | 1 | 2 | 3 | 4 | VB |
|---|---|---|---|---|---|
| $W_A$ | 0,35 | 0,45 | 0,55 | 0,55 | 0.52 |
| $W_B$ | 0,55 | 0,45 | 0,35 | 0,35 | 0,48 |
| $W_C$ | 0,10 | 0,10 | 0,10 | 0,10 | 0 |
| $VZ_1$ [m$^3$/g] | 80 | 80 | 100 | 60 | 55 |
| MFR(2) | 3,5 | 2,3 | 2,3 | 2,0 | 0,7 |
| MFR(3) | 1,2 | 0,7 | 0,55 | 0,56 | --- |
| MFR/5 [g/10'] | 1,07 | 0,55 | 0,30 | 0,36 | 0,4 |

Tabelle 1 (fortgesetzt)

| Beispiel | 1 | 2 | 3 | 4 | VB |
|---|---|---|---|---|---|
| MFR/21,6 [g/10'] | 17,9 | 11 | 9,5 | 13,8 | 13,4 |
| FRR 21,6/5 | 17 | 20 | 31,6 | 36,3 | 33,6 |
| $VZ_{ges}$ [cm$^3$/g] | 306 | 325 | 392 | 373 | 329 |
| Dichte [g/cm$^3$] | 0,954 | 0,952 | 0,953 | 0,954 | 0,954 |
| BZ 0°C [kJ/m$^2$] | 9,6 | 10,7 | 12,6 | 7,8 | 6 |
| BKM [N/mm$^2$] | 1270 | 1200 | 1240 | 1280 | 1275 |
| SR-Rheometer [%] | 200 | 151 | 153 | 143 | 91 |
| SRB [h] | 3,7 | 16 | 54,2 | 54,1 | 39 |

Die Abkürzungen der physikalischen Eigenschaften in der Tabelle 1 haben die folgende Bedeutung:

- BKM = Biegekriechmodul, gemessen nach ISO 54852-Z4 in N/mm$^2$ als Einminutenwert,

- SRB = Spannungsrissbeständigkeit der erfindungsgemäßen Formmasse. Sie wird nach einer internen Messmethode ermittelt. Diese Labormethode ist von M. Fleißner in Kunststoffe 77 (1987), S. 45 ff, beschrieben. Diese
Publikation zeigt, dass zwischen der Bestimmung des langsamen Risswachstums im Zeitstandversuch an rundum
gekerbten Probestäben und dem spröden Ast der Zeitstandsinnendruckprüfung nach ISO 1167 ein Zusammenhang besteht. Eine Verkürzung der Zeit bis zum Versagen wird durch die Verkürzung der Rissinitiierungszeit durch
die Kerbe (1,6 mm/Rasierklinge) in Ethylenglykol als spannungsrissfördemdem Medium bei einer Temperatur von
80 °C und einer Zugspannung von 3,5 MPa erreicht. Die Probenherstellung erfolgt, indem drei Probekörper mit
den Abmessungen 10 x 10 x 90 mm aus einer 10 mm dicken Pressplatte heraus gesägt werden. Die Probekörper
werden rundum mit einer Rasierklinge in einer eigens dafür angefertigten Kerbvorrichtung (dargestellt in Abbildung
5 in der Publikation von Fleißner) in der Mitte gekerbt. Die Kerbtiefe beträgt 1,6 mm.

- BZ = Bruchzähigkeit der erfindungsgemäßen Formmasse. Sie wird ebenfalls nach einer internen Messmethode
an Probestäben mit den Abmessungen 10 x 10 x 80 mm, die aus einer 10 mm dicken Pressplatte herausgesägt
wurden, bestimmt. In der bereits erwähnten Kerbvorrichtung werden sechs dieser Probestäbe mit der Rasierklinge
in der Mitte gekerbt. Die Kerbtiefe beträgt 1,6 mm. Die Durchführung der Messung entspricht weitgehend der
Charpy-Messprozedur nach ISO 179 bei veränderten Probekörpem und veränderter Schlaggeometrie (Widerlagerabstand). Alle Probekörper werden über eine Zeitdauer von 2 bis 3 h auf die Messtemperatur von 0 °C temperiert. Man legt dann einen Probekörper zügig auf das Widerlager eines Pendelschlagwerks gemäß ISO 179.
Der Widerlagerabstand beträgt 60 mm. Der Fall des 2 J Hammers wird ausgelöst, wobei der Fallwinkel auf 160 °,
die Pendellänge auf 225 mm und die Auftreffgeschwindigkeit auf 2,93 m/sec eingestellt wird. Zur Auswertung der
Messung wird der Quotient aus verbrauchter Schlagenergie und Anfangsquerschnittfläche an der Kerbe $a_{FM}$ in
mJ/mm$^2$ berechnet. Dabei können nur Werte bei vollständigem Bruch und Schamierbruch als Grundlage für einen
gemeinsamen Mittelwert dienen (siehe ISO 179).

- SR = Schwellrate, gemessen in einem Hochdruckkapillarrheometer bei einer Scherrate von 1440 1/s in einer 2/2
Rundlochdüse mit einem konischen Einlauf (Winkel = 15 °) bei einer Temperatur von 190 °C.

Die Messwerte zeigen deutlich, dass die erfindungsgemäße Formmasse durchweg zu besseren Festigkeitseigenschaften führte und sich auch bei der Herstellung besser verarbeiten ließ.

Tabelle 2

| Für die Hohlkörper-Prüfung wurden auf Bekum BAE 3 500 ml Rundflaschen unter folgenden Bedingungen und mit folgendem Ergebnis hergestellt: | | | | | |
|---|---|---|---|---|---|
| **Beispiel** | 1 | 2 | 3 | 4 | VB 1 |
| Grundspalt | 150 | 150 | 150 | 150 | 200 |
| Drehzahl [u/min] | 17,7 | 17,7 | 17,7 | 17,7 | -- |

Tabelle 2   (fortgesetzt)

| Für die Hohlkörper-Prüfung wurden auf Bekum BAE 3 500 ml Rundflaschen unter folgenden Bedingungen und mit folgendem Ergebnis hergestellt: | | | | | |
|---|---|---|---|---|---|
| **Beispiel** | 1 | 2 | 3 | 4 | VB 1 |
| Blaszeit [sec] | 15 | 14,0 | 12,0 | 11,2 | 12 |
| Gewicht [g] | 41,4 | 37,4 | 36,0 | 35,6 | 38 |
| Wanddicke [mm] | 1,2 | 1,00 | 0,90 | 0,85 | -- |
| Schweißnahtdicke [mm] | 2,0 | 2,0 | 1,0 | 1,0 | (0,5) (V-Kerbe) |
| Schmelzbruch [Note] | 2 | 2 | 2 | 2 | 2 |
| Stippen [Note] | 2 | 2 | 2 | 3 | 1 |
| Bemerkung | matt | matt | matt | matt | matt |

Man sieht, dass die Formmasse nach dem Vergleichsbeispiel eine zu dünne Schweißnaht bildet, die zudem noch eine V-Kerbe aufweist, was eine Schwachstelle darstellt, die unter Druckbelastung aufplatzen kann.

**Patentansprüche**

1.   Polyethylen Formmasse mit multimodaler Molmassenverteilung, die eine Gesamtdichte von $\geq 0,940$ g/cm$^3$ besitzt und einen MFI$_{190/5}$ im Bereich von 0,01 bis 10 dg/min, **dadurch gekennzeichnet, dass** sie eine Menge von 30 bis 60 Gew.-% an niedermolekularem Ethylenhomopolymer A enthält, das eine Viskositätszahl VZ$_A$ im Bereich von 40 bis 150 cm$^3$/g, besitzt, eine Menge von 30 bis 65 Gew.-% an hochmolekularem Copolymer B aus Ethylen und einem weiteren Olefin mit 4 bis 10 C-Atomen, das eine Viskositätszahl VZ$_B$ im Bereich von 150 bis 800 cm$^3$/g, besitzt, und eine Menge von 1 bis 30 Gew.-% an ultrahochmolekularem Ethylenhomo- oder -copolymer C, das eine Viskositätszahl VZ$_C$ im Bereich von 900 bis 3000 cm$^3$/g besitzt.

2.   Polyethylen Formmasse nach Anspruch 1, **dadurch gekennzeichnet, dass** sie eine hervorragende Verarbeitbarkeit zu Hohlkörpern besitzt, ausgedrückt durch eine Schwellrate im Bereich von 100 bis 300 %.

3.   Verfahren zum Herstellen einer Polyethylen Formmasse nach Anspruch 1, bei dem die Polymerisation der Monomeren in Suspension bei Temperaturen im Bereich von 20 bis 120 °C, einem Druck im Bereich von 2 bis 60 bar und in Gegenwart eines hochaktiven Ziegler-Katalysators durchgeführt wird, der aus einer Übergangsmetallverbindung und einer aluminiumorganischen Verbindung zusammengesetzt ist, **dadurch gekennzeichnet, dass** die Polymerisation dreistufig geführt wird, wobei die Molmasse des in jeder Stufe hergestellten Polyethylens jeweils mit Hilfe von Wasserstoff geregelt wird.

4.   Verwendung einer Polyethylen Formmasse nach Anspruch 1 zur Herstellung von Hohlkörpern wie Kraftstoffbehälter, Kanister, Fässer oder Flaschen, wobei die Polyethylen Formmasse zunächst in einem Extruder bei Temperaturen im Bereich von 200 bis 250 °C plastifiziert und dann durch eine Düse in eine Blasform ausgepresst und dort abgekühlt wird.

**Claims**

1.   A polyethylene molding composition with multimodal molar mass distribution, which has an overall density of $\geq$ 0.940 g/cm$^3$ and has an MFI$_{190/5}$ in the range from 0.01 to 10 dg/min, which comprises from 30 to 60% by weight of low-molecular-weight ethylene homopolymer A having a viscosity number VN$_A$ in the range from 40 to 150 cm$^3$/g, from 30 to 65% by weight of high-molecular-weight copolymer B made from ethylene and from another olefin having from 4 to 10 carbon atoms and having a viscosity number VN$_B$ in the range from 150 to 800 cm$^3$/g, and from 1 to 30% by weight of ultrahigh-molecular-weight ethylene homo- or copolymer C having a viscosity number VN$_C$ in the range from 900 to 3 000 cm$^3$/g.

2.   The polyethylene molding composition as claimed in claim 1, which has excellent capability for processing to give blow moldings, expressed in terms of a swell index in the range from 100 to 300%.

3. A process for preparing a polyethylene molding composition as claimed in claim 1, by carrying out the polymerization of the monomers in suspension at temperatures in the range from 20 to 120°C, at a pressure in the range from 2 to 60 bar and in the presence of a high-activity Ziegler catalyst composed of a transition metal compound and of an organoaluminum compound, which comprises conducting the polymerization in three stages, the molar mass of the polyethylene prepared in each stage being regulated with the aid of hydrogen.

4. The use of a polyethylene molding composition as claimed in claim 1 for producing blow moldings, such as fuel tanks, canisters, drums, or bottles, where the polyethylene molding composition is first plastified in an extruder at temperatures in the range from 200 to 250°C and is then extruded through a die into a blow mold, where it is cooled.

**Revendications**

1. Matière à mouler de polyéthylène avec une distribution multimodale de la masse moléculaire qui possède une masse volumique totale $\geq$0,940 g/cm$^3$ et un MFI$_{190/5}$ dans le domaine de 0,01 à 10 dg/min, **caractérisée en ce qu'**elle présente une teneur de 30 à 60 % en poids en éthylène homopolymère de bas poids moléculaire A, qui possède un indice de viscosité IV$_A$ dans le domaine de 40 à 150 cm$^3$/g, une teneur de 30 à 65 % en poids en copolymère de haut poids moléculaire B d'éthylène et d'une autre oléfine présentant 4 à 10 atomes de carbone, qui possède un indice de viscosité IV$_B$ dans le domaine de 150 à 800 cm$^3$/g, et une teneur de 1 à 30 % en poids en éthylène homo- ou copolymère C, qui possède un indice de viscosité IV$_C$ dans le domaine de 900 à 3000 cm$^3$/g.

2. Matière à mouler de polyéthylène selon la revendication 1, **caractérisée en ce qu'**elle possède une excellente aptitude à la transformation en corps creux, exprimée par le taux de gonflement dans le domaine de 100 à 300 %.

3. Procédé pour la préparation d'une matière à mouler de polyéthylène selon la revendication 1, dans lequel on met en oeuvre la polymérisation des monomères en suspension à une température dans le domaine de 20 à 120°C, une pression dans le domaine de 2 à 60 bars et en présence d'un catalyseur Ziegler hautement actif, qui est constitué par un composé de métaux de transition et un composé organo-aluminié, **caractérisé en ce qu'**on met en oeuvre la polymérisation en trois étapes, le poids moléculaire du polyéthylène préparé dans chaque étape est chaque fois réglée à l'aide d'hydrogène.

4. Utilisation d'une matière à mouler de polyéthylène selon la revendication 1 pour la fabrication de corps creux, tels des bidons pour carburants, des bidons, tonneaux ou bouteilles, la matière à mouler de polyéthylène étant d'abord plastifiée dans une extrudeuse à une température dans le domaine de 200 à 250°C et ensuite comprimée à travers une tuyère dans un moule à souffler, où elle est refroidie.